Europäisches Patentamt

European Patent Office

Office européen des brevets

(19)

(11) Veröffentlichungsnummer : **0 134 032**
**B1**

(12) **EUROPÄISCHE PATENTSCHRIFT**

(45) Veröffentlichungstag der Patentschrift :
15.03.89

(51) Int. Cl.⁴ : **A 01 B 29/04**

(21) Anmeldenummer : 84109610.0

(22) Anmeldetag : 13.08.84

(54) **Untergrundpacker.**

(30) Priorität : 27.08.83 DE 3330998

(43) Veröffentlichungstag der Anmeldung :
13.03.85 Patentblatt 85/11

(45) Bekanntmachung des Hinweises auf die Patenterteilung : 15.03.89 Patentblatt 89/11

(84) Benannte Vertragsstaaten :
FR GB NL

(56) Entgegenhaltungen :
DE--C-- 419 101
DE--U-- 1 974 935
FR--A-- 1 321 576
FR--A-- 2 417 243
US--A-- 1 677 127
US--A-- 1 829 605
US--A-- 2 818 008

(73) Patentinhaber : **H. Niemeyer Söhne GmbH & Co. KG**
**Heinrich-Niemeyer-Strasse 52**
**D-4446 Hörstel (DE)**

(72) Erfinder : **Barlage, Bruno, Dipl.-Ing.**
**Beethovenstrasse 13**
**D-4446 Hörstel (DE)**
Erfinder : **Werthmöller, Gregor**
**Heinrich-Niemeyer-Strasse 4**
**D-4446 Hörstel (DE)**

(74) Vertreter : **Busse & Busse Patentanwälte**
**Postfach 1226 Grosshandelsring 6**
**D-4500 Osnabrück (DE)**

## Beschreibung

Die Erfindung bezieht sich auf einen einreihigen Untergrundpacker in einer Ausbildung gemäß dem Oberbegriff des Anspruchs 1.

Bekannte Untergrundpacker dieser Art (DE-C-419 101) verfügen in einem von einem Zugfahrzeug oder Zuggerät abgehängten oder abgebauten Zustand über keine eigene Standfestigkeit, wie sie bei Anhänge- oder Anbaugeräten in mehrreihiger Ausführung mit und ohne zusätzlicher Laufradabstützung (FR-A-1 321 576) gegeben ist.

Der Erfindung liegt die Aufgabe zugrunde, einen einreihigen Untergrundpacker der im Oberbegriff des Anspruchs 1 angegebenen Art mit der Standfähigkeit eines mehrreihigen Untergrundpackers zu schaffen. Diese Aufgabe löst der Untergrundpacker nach der Erfindung durch die im Anspruch 1 angegebenen Merkmale. Hinsichtlich weiterer Ausgestaltungen wird auf die Ansprüche 2 bis 14 verwiesen.

Durch den geringfügigen Achsversatz zwischen den Drehachsen verschiedener Packerringgruppen wird ein Untergrundpacker geschaffen, der ohne weiteres abgehängt und — beispielsweise jeweils an Furchenenden — abgestellt werden kann, ohne daß das Gerät kippt oder sonstige nennenswerte Lageveränderungen gegenüber einer Betriebsstellung erfährt. Der Untergrundpacker nach der Erfindung ist dabei unmittelbar mit dem Anhänge- oder Anbauvorgang an ein Zugfahrzeug oder Zuggerät betriebsbereit und bedarf keiner vorbereitenden Umstellungs- oder Vorbereitungsarbeiten. Dennoch wird infolge der Einreihigkeit des Untergrundpackers der Boden innerhalb der Arbeitsbreite des Gerätes während eines Arbeitsganges nur einmal bearbeitet, wohingegen bei mehrreihigen Packern oder sonstigen bodenbearbeitenden Geräten während eines Arbeitsganges mehrfache Bodenbearbeitungen in unmittelbarer Aufeinanderfolge erfolgen, was in zahlreichen Fällen unerwünscht ist.

Mehrere Ausführungsbeispiele des Gegenstands der Erfindung sind in der Zeichnung näher veranschaulicht. In der Zeichnung zeigen :

Fig. 1 eine schematische Draufsicht auf eine erste Ausführung eines Untergrundpackers nach der Erfindung mit einer Aufteilung der Packerringe in zwei Gruppen, die in bzw. entgegen Fahrtrichtung zueinander versetzt angeordnet sind,

Fig. 2 eine Draufsicht ähnlich Fig. 1 zur Veranschaulichung einer zweiten Ausführung mit vergrößerter Arbeitsbreite und gleicher Anzahl an Packerringen innerhalb der beiden Packerringgruppen,

Fig. 3 eine Draufsicht ähnlich Fig. 1 zur Veranschaulichung einer dritten Ausführung nach der Erfindung mit drei Gruppen von Packerringen,

Fig. 4 eine Draufsicht ähnlich Fig. 3 einer vierten Ausführung nach der Erfindung mit vergrößerter Arbeitsbreite,

Fig. 5 eine Draufsicht auf eine fünfte Ausführung nach der Erfindung mit zwei Gruppen von versetzt angeordneten, fliegend gelagerten Packerringen,

Fig. 6 eine Draufsicht ähnlich Fig. 5 zur Veranschaulichung einer sechsten/Ausführung nach der Erfindung mit vergrößerter Arbeitsbreite,

Fig. 7 eine Draufsicht ähnlich Fig. 5 zur Veranschaulichung einer siebenten Ausführung nach der Erfindung mit drei Gruppen von versetzt angeordneten, fliegend gelagerten Packerringen,

Fig. 8 eine Draufsicht ähnlich Fig. 7 zur Veranschaulichung einer achten Ausführung nach der Erfindung mit vergrößerter Arbeitsbreite,

Fig. 9 eine Draufsicht ähnlich Fig. 7 zur Veranschaulichung einer neunten Ausführung nach der Erfindung mit nochmals vergrößerter Arbeitsbreite, und

Fig. 10 eine abgebrochene Querschnittsdarstellung durch zwei benachbarte Gruppen von unterschiedlichen Packerringen zur Veranschaulichung der Packerringausbildung und -abstützung.

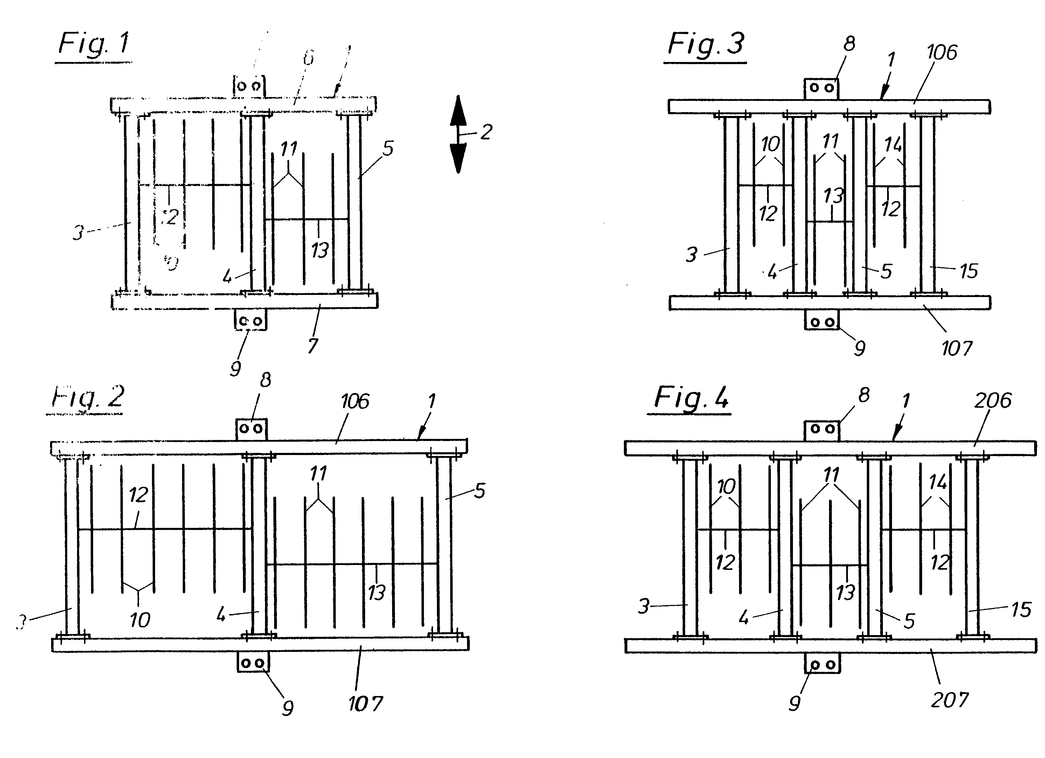

Der in Fig. 1 veranschaulichte einreihige Untergrundpacker besteht im einzelnen aus einem Rahmen 1, der aus parallel zur Fahrtrichtung 2 ausgerichteten Längsstreben 3,4 und 5 und quer zur Fahrtrichtung 2 verlaufenden Querstreben 6 und 7 aufgebaut ist. Der Rahmen 1 weist dabei Anschlußmittel 8,9 für eine Anhängung oder, bei entsprechender Ausbildung, auch für einen Anbau an ein Zugfahrzeug, z. B. einen landwirtschaftlichen Schlepper, auf.

Der Untergrundpacker nach Fig. 1 umfaßt ferner eine Anzahl von in gegenseitigem Abstand zueinander angeordneten drehbaren Packerringen 10, 11, die an den Längsstreben 3, 4, 5 des Rahmens 1 abgestützt sind.

Die Packerringe 10, von denen bei der Ausführung nach Fig. 1 vier vorgesehen sind, bilden eine erste Gruppe von zueinander koaxial angeordneten Packerringen, die beispielsweise auf einer Packerwelle 12 angeordnet sind und eine herkömmliche Ausbildung aufweisen können. Die Packerwelle 12 ist dabei an ihren freien Enden in nicht näher veranschaulichten Lagern an den Längsstreben 3 und 4 des Rahmens, d. h. beidseitig, gelagert. Die Packerringe 11, von denen drei vorgesehen sind, bilden ihrerseits eine zweite Gruppe von untereinander koaxial angeordneten Packerringen, die auf einer gesonderten Packerwelle 13 in herkömmlicher Weise angeordnet sein können. Die Packerwelle 13 der zweiten Gruppe ist wiederum an ihren beiden Enden, d. h. zweiseitig, in gesonderten, nicht näher veranschaulichten Lagern an den Längsstreben 4 und 5 des Rahmens 1 gelagert.

Die von den Packerwellen 12, 13 definierten Drehachsen der Packerringe 10, 11 der beiden Gruppen können in einer gemeinsamen Fluchtlinie quer zur Fahrtrichtung 2 ausgerichtet sein, sind bei dem Beispiel nach Fig. 1 jedoch bevorzugt untereinander zwar parallel ausgerichtet, jedoch gegeneinander in Fahrtrichtung horizontal versetzt angeordnet, so daß der Untergrundpacker trotz einreihiger Ausführung eine eigene Standfestigkeit darbietet, die insbesondere bei Umhänge- oder Umbauvorgängen am Feldende vorteilhaft ist.

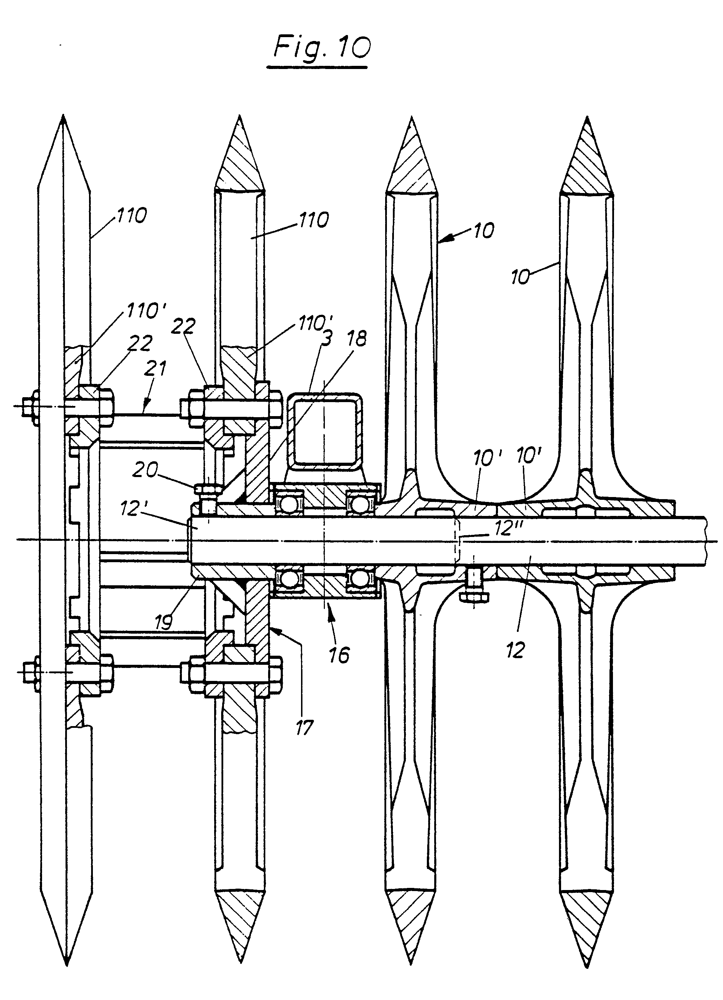

Anstelle von durchgehenden, zweiseitig gelagerten Packerwellen 12, 13 können die Gruppen von Packerringen 10 bzw. 11 auch aus wellenfrei zusammengefügten Gruppen von Packerringen einer besonderen Ausbildung aufgebaut sein, auf die im Zusammenhang mit der Beschreibung der Fig. 10 noch näher eingegangen werden wird.

Die Längs- und Querstreben 3, 4, 5 bzw. 6 und 7 sind bevorzugt lösbar miteinander verbunden, um Rahmen unterschiedlicher Konfiguration besonders einfach und preisgünstig herstellen zu können. Bei den in Fig. 1 bis 4 veranschaulichten Beispielen haben die Längsstreben eine untereinander gleiche Ausbildung und Abmessung und dabei eine Anordnung zwischen den Querstreben 6 und 7, so daß zum einen die Abstandsverhältnisse zwischen den Längsstreben 3, 4, 5 zueinander beim Zusammenbau mit ein und denselben Querstreben 6, 7 veränderlich ist und zum anderen für unterschiedliche Arbeitsbreiten und Aufteilungen lediglich Querstreben unterschiedlicher Längenabmessung benötigt werden. Zugleich mit der dadurch herbeigeführten Variabilität verbilligt sich die Rahmengestaltung.

Die Fig. 2 veranschaulicht eine Ausführung ähnlich Fig. 1, bei der allerdings zur Vergrößerung der Arbeitsbreite verlängerte Querstreben 106, 107 vorgesehen sind, und bei der die beiden Gruppen von Packerringen 10 bzw. 11 jeweils aus sechs Stück aufgebaut sind und dementsprechend eine untereinander gleiche Ausbildung und Arbeitsbreite aufweisen.

Während bei den Ausführungen nach Fig. 1 und 2 jede Gruppe von Packerringen 10 bzw. 11 je in einem längsseitig von je zwei Längsstreben 3, 4 bzw. 4, 5 begrenzten Rahmenabteil angeordnet sind, sind bei den Ausführungen nach Fig. 3 und 4 die Packerringe in drei Gruppen von Packerringen 10, 11, 14 aufgeteilt, wobei je Gruppe lediglich zwei Packerringe vorgesehen sind. Der Rahmen umfaßt dabei vier Längsstreben 3, 4, 5 und 15, die dementsprechend drei Rahmenabteile längsseitig begrenzen. Die Querstreben 106, 107 stehen beidseits in Querrichtung ein Stück über die jeweils außenliegenden Längsstreben 3, 15 über, so daß die Möglichkeit gegeben ist, durch Anbau weiterer Rahmenstreben ein oder zwei weitere Rahmenabteile für die Aufnahme entsprechender weiterer Gruppen von Packerringen zu bilden.

Die beiden äußeren Gruppen von Packerringen 10 bzw. 14 sind jeweils wiederum auf Packerwellen 12 abgestützt, die in oben beschriebener Weise gelagert sind und Drehachsen definieren, die untereinander fluchten. Die Packerringe 11 der mittleren Gruppe sind auf einer Packerwelle 13 abgestützt, die in Fahrtrichtung versetzt angeordnet und am Rahmen 1 gelagert ist. Die drei Gruppen von Packerringen 10, 11 bzw. 14 bilden dementsprechend eine zu einer vertikalen Längsmittelachse symmetrische Packerausführung.

Dies gilt auch für die Ausführung nach Fig. 4, die sich von der nach Fig. 3 im wesentlichen nur dadurch unterscheidet, daß die drei Gruppen von Packerringen 10, 11 bzw. 14 aus je drei Packerringen zusammengesetzt sind. Dabei könnte eine Ausführung der Querstreben 106 gemäß Fig. 3 Anwendung finden, jedoch sind hier nochmals verlängerte Querstreben 206, 207 vorgesehen, um trotz der ohnehin schon erreichten höheren Arbeitsbreite die Möglichkeit zur weiteren Vergrößerung der Arbeitsbreite durch stirnseitigen Anbau weiterer Gruppen zu bieten. Diese könnten Drehachsen erhalten, die entweder mit den Drehachsen der Packerwellen 12 oder der der Packerwelle 13 fluchten.

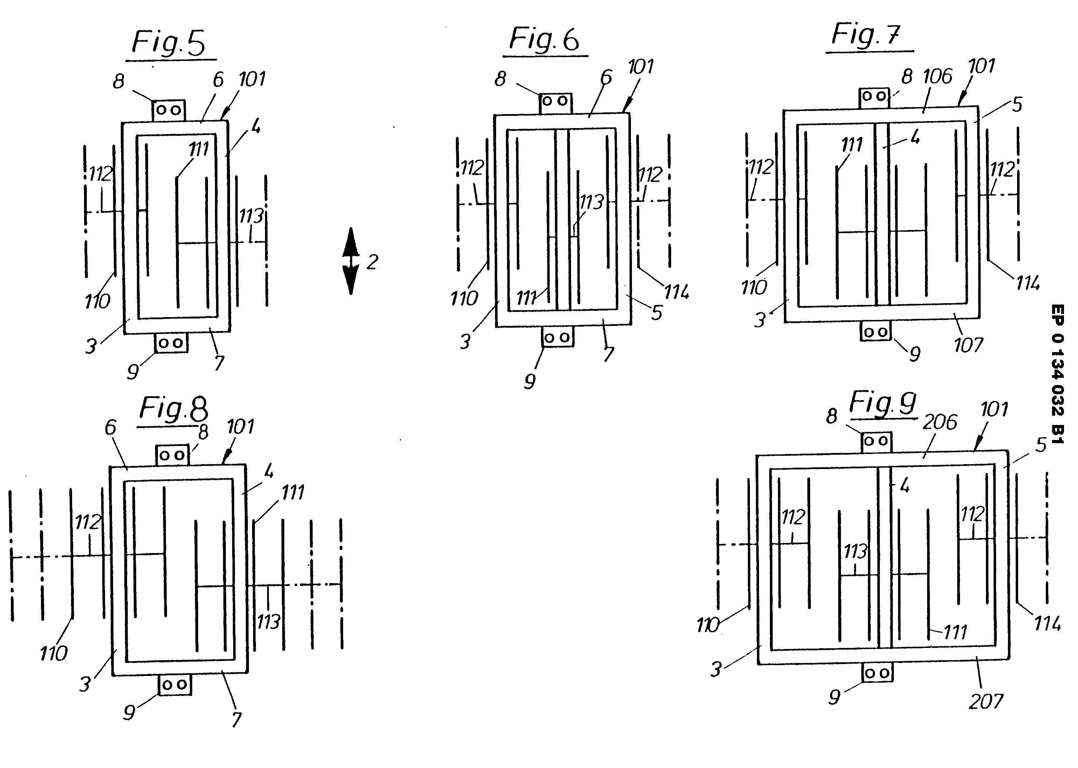

Die Fig. 5 bis 9 veranschaulichen eine Gruppe von Ausführungsbeispielen für einen erfindungsgemäßen Untergrundpacker, bei denen die insgesamt vorhandenen Packerringe in zwei bzw. drei Gruppen von Packerringen 110, 111 bzw. 114 unterteilt sind, deren Drehachsen 112 bzw. 113 gegeneinander horizontal versetzt sind. Die Rahmen 101 können wie bei den Beispielen nach Fig. 1 bis 4 ausgebildet sein, können statt dessen auch eine Ausbildung haben, bei der jeweils die Querstreben 6, 7 bzw. 106, 107 bzw. 206, 207 zwischen die Längsstreben 3,4 bzw. 5 zwischengesetzt sind, und sind in den Fig. 5 bis 9 lediglich als Rechtecke veranschaulicht, ohne dabei konstruktive Einzelheiten wiederzugeben.

Sämtliche Gruppen von Packerringen 110, 111 bzw. 114 sind jeweils fliegend an ihren Längsstreben 3, 4 bzw. 5 gelagert, jedoch in der Weise, daß die Packerringe jeder Gruppe zu beiden Seiten der ihr zugeordneten Längsstrebe des Rahmens 101 verteilt angeordnet sind. Auf die nähere Ausbildung der Packerringe und deren Lagerung wird im Zusammenhang mit der Fig. 10 noch eingegangen werden.

Die Ausführung nach Fig. 5 besitzt in ihrer Grundgestalt eine erste Gruppe von zwei Packerringen 110, die außenseitig, wie das strichpunktiert angedeutet ist, um einen Packerring 110 ergänzt werden kann. Die zweite Gruppe von Packerringen 111 umfaßt in der Grundgestalt der Maschine drei Packerringe, und auch diese Gruppe ist durch Anbau eines weiteren Packerrings 111 ergänzbar. Auf diese Weise besteht die Möglichkeit, mit ein und demselben Rahmen 101 einen Untergrundpacker anzubieten, dessen Packerringzahl zwischen fünf und sieben beträgt. Die Aufteilung der Packerringe innerhalb jeder Gruppe zur zugehörigen Längsstrebe 3,4 wird vorzugsweise jeweils so gewählt, daß je einem innen im Rahmenabteil befindlichen Packerring höchstens zwei außenliegende Packerringe vorgesehen sind. Auf diese Weise ergibt sich eine besonders stabile Packerausführung mit zugleich ohne weiteres von den Gruppenlagern aufnehmbaren Belastungen, die durch die beidseitigen Ringverteilungen wesentlich günstiger sind als bei einer vollständig einseitig fliegenden Lagerung.

Die Ausführung nach Fig. 6 besitzt eine Grundgestalt mit insgesamt vier Packerringen 110 in der ersten und vier Packerringen 111 in der zweiten Gruppe. Beide Gruppen können durch endseitige Ergänzung um bis zu zwei Ringe ausgebaut werden, so daß bei dieser Ausführung eine Variationsmöglichkeit zwischen acht bis zwölf Packerringen gegeben ist.

Bei der Ausführung nach Fig. 7 sind drei Gruppen vorgesehen, von denen die erste und die zweite Gruppe je zwei Packerringe 110 bzw. 111 in der Grundgestalt aufweist, während die dritte Gruppe zunächst nur von einem einzigen Packerring 114 gebildet wird. Die erste Gruppe kann wieder durch Anfügen eines weiteren Packerringes und die dritte Gruppe durch Anfügen von bis zu zwei Packerringen ergänzt werden, so daß diese Ausführung eine Variationsbreite von fünf bis acht Packerringen umfaßt. Infolge der Bildung von zwei Rahmenabteilen ist hier eine Ausführung verwirklicht, die ein besonders Maß an Stabilität erbringt.

Dies gilt auch für die Ausführungen nach Fig. 8 und 9. Bei der Fig. 8 umfaßt die erste Gruppe in der Grundgestalt zwei Packerringe 110, die zweite Gruppe vier Packerringe 111 und die dritte Gruppe zwei Packerringe 114, wobei die erste und die dritte Gruppe jeweils um einen Packerring ausbaubar ist. Dementsprechend beträgt die Variationsbreite acht bis zehn Packerringe, kann jedoch noch auf die Variationsbreite sechs bis zehn vergrößert werden, wenn die beiden äußeren Gruppen zunächst jeweils nur von einem einzigen Packerring 110 bzw. 114 gebildet werden.

Bei der Ausführung nach Fig. 9 umfaßt die erste Gruppe in der Grundgestalt drei Packerringe 110, die zweite Gruppe vier Packerringe 111 und die dritte Gruppe drei Packerringe 114, und die erste und die dritte Gruppe können jeweils wieder durch Hinzufügen eines Packerringes 110 bzw. 114 ausgebaut werden. Die Variationsbreite beträgt dementsprechend zehn bis zwölf Packerringe bzw. acht bis zwölf Packerringe, wenn die erste und die dritte Gruppe zunächst jeweils nur von zwei innenliegenden Packerringen gebildet wird.

Die Ausführungen nach Fig. 1 bis 4 sowie 5 bis 9 zeigen Formen eines Baukastensystems, wobei die Ausführungen nach Fig. 1 bis 4 grundsätzlich von einer zweiseitigen Lagerung jeder Gruppe ausgehen, während die Ausführungen nach Fig. 5 bis 9 fliegende Lagerungen der Packerringe mit beidseitiger Verteilung der Packerringe zu den zugehörigen Längsstreben beinhalten.

Wie die Fig. 10 näher erkennen läßt, sind für die Ausbildung und die Abstützung der Packerringe innerhalb ihrer Gruppen verschiedene Möglichkeiten denkbar.

In der rechten Hälfte der Fig. 10 sind Packerringe 10 gezeigt, die mit einem Nabenkörper 10' versehen und an diesen aneinandergrenzend auf einer durchgehenden Packerwelle 12 angeordnet sind. Die Packerwelle 12 ist dabei an ihrem sichtbaren Ende (ebenso wie an ihrem gegenüberliegenden Ende) in einem Kugellager 16 an der Unterseite der Rahmenstreben, z. B. der Rahmenstrebe 3, gelagert. Eine solche Ausführung ist insbesondere für die Packerausführungen nach Fig. 1 bis 4 vorgesehen, wobei die Möglichkeit besteht, daß die Packerwelle 12 (bzw. 13) jeweils ein über das Lager 16 vorstehendes Ende 12' besitzt, das gewissermaßen als Wellenstummel für den Anbau von Packerringen z. B. 110 der oben schon erwähnten besonderen Ausbildung für eine fliegende bzw. wellenfreie Abstützung dienen kann. Eine solche Ergänzung bietet sich beispielsweise bei den Ausführungen nach Fig. 3 und 4 besonders an.

Bei den Ausführungen nach Fig. 5 bis 9 findet in den Lagern 16 jeweils nur ein Wellenstück Aufnahme, dessen rechte Begrenzung in Fig. 10 bei 12" angedeutet ist. Auf den beidseits vorstehenden Wellenstummeln einer derartigen Ausbildung wird jeweils ein Packerring 110 (bzw. 111 bzw. 114) aufgesetzt, der anstelle eines Nabenkörpers einen Innenringteil 110' und ein damit verbundenes Anschlußteil 17 aufweist. Dieses Anschlußteil umfaßt ein mit dem Innenringteil 110' verschraubbares Trägerteil 18, an dem eine axial ausgerichtete Nabenhülse 19 mit Feststellschraube 20 angebracht ist. Ein Packerring 110 mit derartigem Anschlußteil 17 ist, wie dargestellt, auf das vorstehende Ende 12' der Welle 12 bzw. auf einen beidseitig über das Lager 16 vorstehenden Wellenstummel 12', 12" aufsetzbar. Mit dem mit Anschlußteil 17 versehenen Packerring 110 ist dann ein baugleicher Packerring 110 verbindbar, und zwar mittels eines Distanzringkörpers 21, der mit Flanschringteilen 22 zur Schraubverbindung mit den Innenringteilen 110' benachbarter Packerringe 110 versehen ist. Grundsätzlich ist es jedoch auch möglich, auf ein Wellenstück 12', 12" Packerringe 10 aufzusetzen.

Eine weitere Möglichkeit besteht schließlich noch darin, daß die Anschlußteile 17 anstelle einer Nabenhülse 19 fest mit einem einseitig axial vorstehenden, im Lager 16 abstützbaren Wellenstummel (nicht dargestellt) versehen sind, eine Ausführung, die es auch ermöglicht, Gruppen von Packerringen z. B. bei den Ausführungen nach Fig. 1 bis 4 zweiseitig in gegenüberliegenden Lagern 16 an entsprechenden Längsstreben des Rahmens abzustützen.

Angesichts der Möglichkeit zur Variation der Arbeitsbreite ist es zweckmäßig, daß die Anschlußmittel 8, 9 entweder quer verstellbar ausgebildet sind oder mehrere in einer Reihe nebeneinander angeordnete Anschlußpunkte aufweisen, um den Angriffspunkt jeweils in die Symmetrieebene bzw. in den Momentenschwerpunkt des Gerätes verlegen zu können.

**Patentansprüche**

1. Einreihiger Untergrundpacker mit einem mit Anschlußmitteln (8, 9) für eine Anhängung oder einen Anbau an ein Zugfahrzeug versehenen Rahmen (1 ; 101), der aus parallel zur Fahrtrichtung (2) ausgerichteten Längs- und quer zur Fahrtrichtung (2) verlaufenden Querstreben (3, 4, 5 ; 6, 7) aufgebaut ist, und mit einer Anzahl von in gegenseitigem Abstand angeordneten, um untereinander parallele Drehachsen (12, 13 ; 112, 113) drehbaren Packerringen (10, 11, 14 ; 110, 111, 114), die an den Längsstreben (3, 4, 5) des Rahmens (1 ; 101) abgestützt und gruppenweise zusammengefaßt sind, dadurch gekennzeichnet, daß die Drehachsen (12, 13 ; 112, 113) der Packerringe (10, 11, 14 ; 110, 111, 114) verschiedener Gruppen gegeneinander in Fahrtrichtung (2) horizontal versetzt angeordnet sind.

2. Untergrundpacker nach Anspruch 1, dadurch gekennzeichnet, daß die Anzahl der Packerringe (10, 11, 14 ; 110, 111, 114) je Gruppe gleich ist.

3. Untergrundpacker nach Anspruch 1, dadurch gekennzeichnet, daß die Anzahl der Packerringe (10, 11, 14 ; 110, 111, 114) je Gruppe unterschiedlich ist.

4. Untergrundpacker nach einem oder mehrender Ansprüche 1 bis 3 dadurch gekennzeichnet, daß bei Zuordnung der Packerringe (10, 11, 14 ; 110, 111, 114) zu drei Gruppen die Drehachsen (12 ; 112) der beiden äußeren Gruppen untereinander fluchten und zur Drehachse (13 ; 113) der mittleren Gruppe versetzt angeordnet sind.

5. Untergrundpacker nach einem oder mehreren der Ansprüche 1 bis 4, dadurch gekennzeichnet, daß bei Zuordnung der Packerringe (10, 11, 14 ; 110, 111, 114) zu drei Gruppen die Anzahl der den beiden äußeren Gruppen zugeordneten Packerringe untereinander gleich ist.

6. Untergrundpacker nach einem oder mehreren der Ansprüche 1 bis 5, dadurch gekennzeichnet, daß die Längs- und die Querstreben (3, 4, 5 ; 6,7 ; 106, 107 ; 206, 207) des Rahmens (1 ; 101) lösbar miteinander verbunden und baukastenartig zusammengesetzt sind.

7. Untergrundpacker nach einem oder mehreren der Ansprüche 1 bis 6, dadurch gekennzeichnet, daß jede Gruppe von Packerringen (10, 11, 14 ; 110, 111, 114) zu ihrer rahmenseitigen Abstützung ein oder zwei ihr zugeordnete, über die Lager (16) an den Längsstreben (3, 4, 5) des Rahmens (1 ; 101) abstützbare Anschlußteile (17) aufweist.

8. Untergrundpacker nach Anspruch 7, dadurch gekennzeichnet, daß die Anschlußteile (17) jeweils ein mit einem der Packerringe (110, 111, 114) verbindbares Trägerteil (18) umfaßt.

9. Untergrundpacker nach Anspruch 8, dadurch gekennzeichnet, daß am Trägerteil (18) ein einseitig axial vorstehender, in einem als Lagerschale ausgebildeten Lager (16) des Rahmens (1 ; 101) drehbar abstützbarer Wellenstummel angebracht ist.

10. Untergrundpacker nach Anspruch 8, dadurch gekennzeichnet, daß am Trägerteil (18) eine axial ausgerichtete, auf ein Wellenende (12') oder Wellenzapfen (12', 12") im Lager (16) des Rahmens (1 ; 101) aufsetzbare Nabenhülse (19) angebracht ist.

11. Untergrundpacker nach einem oder mehreren der Ansprüche 1 bis 10, dadurch gekennzeichnet, daß jede Gruppe von Packerringen (10, 11, 14) in einem längsseitig von je zwei Längsstreben (3, 4 bzw. 5) des Rahmens (1) begrenzten Rahmenabteil angeordnet und zweiseitig in gesonderten Lagern (16) an den Längsstreben abgestützt sind.

12. Untergrundpacker nach Anspruch 11, dadurch gekennzeichnet, daß an zumindest einer der beiden Längsstreben (3, 5) außenseitig zu dieser eine weitere Gruppe von Packerringen in fliegender Lagerung abgestützt ist.

13. Untergrundpacker nach einem oder mehreren der Ansprüche 1 bis 10, dadurch gekennzeichnet, daß jede Gruppe von Packerringen (110, 111, 114) mit beidseitig zu einer der Längsstreben (3, 4, 5) des Rahmens (101) angeordneten Packerringen an dieser in fliegender Lagerung abgestützt sind.

14. Untergrundpacker nach einem oder mehreren der Ansprüche 1 bis 13, dadurch gekennzeichnet, daß die Anschlußmittel (8, 9) mehrere in einer Reihe quer zur Betriebsbewegungsrichtung (2) im Abstand nebeneinander angeordnete Anschlußpunkte aufweisen.

**Claims**

1. A single-row land packer having a frame (1 ; 101) which is provided with connecting means (8, 9) for coupling to or mounting on a towing vehicle and which is composed of longitudinal struts (3, 4 5) aligned parallel to the direction of travel (2) and cross struts (6, 7) extending transversely to the direction of travel (2), and having a plurality of packer rings (10, 11, 14 ; 110, 111, 114) which are arranged with mutual spacing and are rotatable about axles (12, 13 ; 112, 113) parallel to one another and which are supported on the longitudinal struts (3, 4, 5) of the frame (1 ; 101) and are combined in groups, characterised in that the axles (12, 13 ; 112, 113) of the packer rings (10, 11, 14 ; 110, 111, 114) of different groups are arranged staggered horizontally in relation to one another in the direction of travel (2).

2. A land packer according to claim 1, characterised in that the number of packer rings (10, 11, 13 ; 110, 111, 114) is the same in each group.

3. A land packer according to claim 1, characterised in that the number of packer rings (10, 11, 14 ; 110, 111, 114) is different in each group.

4. A land packer according to any one or more of claims 1 to 3, characterised in that, if the packer rings (10, 11, 14 ; 110, 111, 114) are allocated to three groups, the axles (12 ; 112) of the two outer groups are in alignment with one another and are arranged offset from the axle (13 ; 113) of the middle group.

5. A land packer according to any one or more of claims 1 to 4, characterised in that if the packer rings (10, 11, 14 ; 110, 111, 114) are allocated to three groups, the number of packer rings allocated to the two outer groups is the same in each case.

6. A land packer according to any one or more of claims 1 to 5, characterised in that the longitudinal struts (3, 4, 5) and the cross struts (6, 7 ; 106, 107 ; 206, 207) of the frame (1 ; 101) are detachably connected to one another and are assembled as in unit construction.

7. A land packer according to any one or more of claims 1 to 6, characterised in that each group of packer rings (10, 11, 14 ; 110, 111, 114) comprises one or two connecting members (17), which are associated with it and can be supported via the bearings (16) on the longitudinal struts (3, 4, 5) of the frame (1 ; 101) to support the group of packer rings at the frame side.

8. A land packer according to claim 7, characterised in that the connecting members (17) each comprise a supporting portion (18) which can be connected to one of the packer rings (110, 111, 114).

9. A land packer according to claim 8, characterised in that fitted to the supporting portion (18) is a stub shaft which projects axially at one side and can be supported for rotation in a bearing (16), constructed in the form of a bearing bush, of the frame (1 ; 101).

10. A land packer according to claim 8, characterised in that fitted to the supporting portion (18) is an axially aligned hub sleeve (19) which can be placed on a shaft end (12') or shaft journal (12', 12") in the bearing (16) of the frame (1 ; 101).

11. A land packer according to any one or more of claims 1 to 10, characterised in that each group of packer rings (10, 11, 14) is disposed in a frame compartment bounded at the longitudinal sides by two longitudinal struts (3, 4 or 5) of the frame (1) and is supported on the longitudinal struts in separate bearings (16) at two sides.

12. A land packer according to claim 11, characterised in that a further group of packer rings is supported on at least one of the two longitudinal struts (3, 5) at the outside of this, in an overhung bearing arrangement.

13. A land packer according to any one or more of claims 1 to 10, characterised in that each group of packer rings (110, 111, 114) with packer rings arranged at both sides of one of the longitudinal struts (3, 4, 5) of the frame (101) is supported on this in an overhung bearing arrangement.

14. A land packer according to any one or more of claims 1 to 13, characterised in that the connecting means (8, 9) comprise a plurality of connecting points arranged side by side with spacing in a row transverse to the operating direction of movement (2).

**Revendications**

1. Rouleau compacteur de sous-sol à une rangée avec un cadre (1 ; 110) muni de moyens de raccordement (8, 9) pour un accrochage ou un montage sur un véhicule de traction ; ce cadre est constitué d'entretoises (3, 4, 5, 6, 7), longitudinales dirigées parallèlement au sens d'avancement (2) et transversales allant transversalement au sens d'avancement (2) et d'un certain nombre d'anneaux de compactage (10, 11, 14 ; 110, 111, 114) placés à distance mutuelle, mobiles autour d'axe parallèles entre eux (12, 13 ; 112, 113), ces anneaux sont supportés par les entretoises longitudinales (3, 4, 5) du cadre (1, 10) et sont réunis par lots, le rouleau compacteur est caractérisé en ce que les axes de rotation (12, 13, 112, 113) des anneaux de compactage (10, 11, 14 ; 110, 111, 114) de différents groupes sont placés décalés horizontalement dans le sens de marche (2) l'un par rapport à l'autre.

2. Rouleau compacteur de sous-sol selon la revendication 1, caractérisé en ce que le nombre d'anneaux de compactage (10, 11, 14 ; 110, 111, 114) de chaque groupe est le même.

3. Rouleau compacteur de sous-sol selon la revendication 1, caractérisé en ce que le nombre d'anneaux de compactage (10, 11, 14 ; 110, 111, 114) de chaque groupe est variable.

4. Rouleau compacteur de sous-sol suivant une ou plusieurs des revendications 1 à 3, caractérisé en ce que pour la coordination des anneaux de compactage (10, 11, 14 ; 110, 111, 114) en trois groupes, les axes de rotation (12 ; 112) des deux groupes extérieurs sont alignés entre eux et sont placés décalés par rapport à l'axe de rotation (13 ; 113) du groupe central.

5. Rouleau compacteur de sous-sol d'après une ou plusieurs des revendications 1 à 4, caractérisé en ce que pour la coordination des anneaux de compactage (10, 11, 14 ; 110, 111, 114) en trois groupes, le nombre des anneaux de compactage attribués aux deux groupes extérieurs est le même.

6. Rouleau compacteur de sous-sol suivant une ou plusieurs des revendications 1 à 5, caractérisé en ce que les entretoises longitudinales et transversales (3, 4, 5 ; 6, 7 ; 106, 107 ; 206, 207) du cadre (1 ; 101) sont reliées entre elles détachables et sont assemblées à la façon d'une boîte de construction.

7. Rouleau compacteur de sous-sol suivant une ou plusieurs des revendications 1 à 6, caractérisé en ce que chaque groupe d'anneaux de compactage (10, 11, 14 ; 110, 111, 114) présente sur son support, côté cadre, une ou deux pièces d'assemblage (17) associé à lui et pouvant prendre appui sur les paliers (16) fixés aux entretoises (3, 4, 5) du cadre (1 ; 101).

8. Rouleau compacteur de sous-sol suivant la revendication 7, caractérisé en ce que chaque fois une pièce porteuse (18) qui peut être connectée avec un des anneaux de compactage (110, 111, 114) entoure les pièces d'assemblage (17).

9. Rouleau compacteur de sous-sol selon la revendication 8, caractérisé en ce que à la pièce porteuse (18) est attaché une section axiale d'arbre en porte-à-faux d'un côté, qui peut s'appuyer mobile dans un palier (16) sous forme de coquille de coussinet.

10. Rouleau compacteur de sous-sol suivant la revendication 8, caractérisé en ce que à la pièce porteuse (18) est fixé un manchon de moyeu (19) aligné sur l'axe, qui peut se mettre sous une section d'arbre (12') ou sur un tourillon (12', 12") dans le palier (16) du cadre (1, 10).

11. Rouleau compacteur de sous-sol suivant une ou plusieurs des revendications 1 à 10, caractérisé en ce que chaque groupe d'anneaux de compactage (10, 11, 14) est placé dans un compartiment de cadre limité dans le sens de la longueur par deux des entretoises longitudinales, respectivement (3, 4, 5) du cadre (1) et repose des deux côtés sur des paliers (16) séparés.

12. Rouleau compacteur de sous-sol selon la revendication 11, caractérisé en ce que au moins à l'une des deux entretoises (3, 5) à l'extérieur de celles-ci, est appliqué un autre groupe d'anneaux de compactage en position de porte-à-faux.

13. Rouleau compacteur de sous-sol d'après une ou plusieurs des revendications 1 à 10, caractérisé en ce que chaque groupe d'anneaux de compactage (110, 111, 114) avec des anneaux de compactage disposés des deux côtés d'une des entretoises (3, 4, 5) du cadre (101) s'appuie à celle-ci en position de porte-à-faux.

14. Rouleau compacteur de sous-sol selon une ou plusieurs des revendications de 1 à 13, caractérisé en ce que les moyens d'accrochage (8, 9) présentent plusieurs points d'accrochage disposés sur une ligne perpendiculaire à la direction d'exploitation, à un certain intervalle les uns des autres.

EP 0 134 032 B1

Fig.1

Fig.2

Fig.3

Fig.4

1

**Fig. 7**

**Fig. 6**

**Fig. 5**

**Fig. 9**

**Fig. 8**

EP 0 134 032 B1

## Fig. 10